# EUROPEAN PATENT APPLICATION

(11) **EP 2 693 357 A1**
(43) Date of publication of application: **05.02.2014**
(21) Application number: 11862722.3
(22) Date of filing: 31.03.2011
(51) Int. Cl.: G06F 21/20

(54) **MANAGEMENT DEVICE, MANAGEMENT PROGRAM, AND MANAGEMENT METHOD**

(71) Applicant: Fujitsu Limited, Kawasaki-shi, Kanagawa 211-8588 (JP)
(72) Inventor: MORINAGA, Masanobu, Kawasaki-shi Kanagawa 211-8588 (JP); KANAYA, Nobuyuki, Kawasaki-shi Kanagawa 211-8588 (JP)
(74) Representative: HOFFMANN EITLE
(86) International application number: PCT/JP2011/058350
(87) International publication number: WO 2012/132012

(57) **Abstract**

A management device (10) includes an authentication unit (10c) and a control unit (10d). If authentication information is received from a first device (11), the authentication unit (10c) included in the management device (10) authenticates the received authentication information by using multiple pieces of authentication information that are stored in the first storing unit (10a). If the authentication performed by the authentication unit (10c) is successful, the control unit (10d) included in the management device (10) executes a login to the second device (12) by using a single piece of login information that is stored in the second storing unit (10b).

## Description

### [Technical Field]

The embodiments discussed herein are directed to a management device, a management program, and a management method.

### [Background Art]

There is a known conventional technology, for operating various kinds of systems, in which a user, such as an administrator, logs into a network device, such as a router and a switch, various kinds of devices, such as a web server and a database (DB) server, or an operating system (OS) from a management terminal.

For example, with the conventional technology, when a failure occurs, a user logs into the various kinds of devices described above from the management terminal by using a command, such as telnet or ssh. Then, by using the management terminal, the user can become aware of the status of the various kinds of devices and sets, in order to, for example, recover from a failure, various kinds of information in accordance with the circumstances. Furthermore, in general, as the system becomes large, the number of system administrators increases in order to operate the system, and furthermore, the number of management terminals through which a login to the various kinds of devices in the system is possible also increases.

Furthermore, there is also a technology for improving, by using an external information providing server and an internal information providing server, the efficiency in an authentication authorization process in an information providing service system that has a lot of users. The external information providing server manages internal user names and internal passwords, which are used by the internal information providing server, by associating them with external user names. Then, the external information providing server accepts an external user name and an external password from the terminal device in order to authenticate a user. If the authentication is successful, the external information providing server converts, by authentication mapping, the external user name to an internal user name and then logs into the internal information providing server by using the internal user name and the internal password that are associated with the external user name. The internal information providing server determines whether the login is accepted on the basis of the internal user name and the internal password.

### Citation List

### Patent Literature

Patent Literature 1: Japanese Laid-open Patent Publication No. 2010-140349
Patent Literature 2: Japanese Laid-open Patent Publication No. 2005-310136
Patent Literature 3: Japanese Laid-open Patent Publication No. 2006-178724
Patent Literature 4: Japanese Laid-open Patent Publication No. 11-31132

### [Summary of Invention]

### [Technical Problem]

However, with the conventional technology described above, there is a problem in terms of security. For example, with the conventional technology, a login is performed from a management terminal to various kinds of devices. Consequently, a user can become aware of information on an account that is used for the login. In such a case, the user can fraudulently log into various kinds of devices and the like in the system. Therefore, a fraudulent act that is undesirable in terms of the security of the system may possibly occur. Furthermore, if a user is aware of the information on an account and then logs into an arbitrary module, the same problem in terms of the security is also present.

Furthermore, with the conventional technology that uses the external information providing server and the internal information providing server, the internal user names and the internal passwords that are information used to log into the internal information providing server are associated with the external user names. However, in the operation management in an ICT system, if, for example, multiple users log into the same device, a single account of the device may sometimes be shared by the multiple users. With the conventional technology that uses the external information providing server and the internal information providing server, the relationship between an external user and an internal user is basically one to one; therefore, it is not possible to use them without processing something. In such a case, there may be a possible operation in which a single set of an internal user name and password is associated with multiple sets of external user names and passwords; however, because there are multiple external users associated with the internal password, there is a high possibility that the internal user name and the internal password are misused, which increases the risk of the leakage of information used for a login and also increases the possibility of the occurrence of fraudulent acts.

According to an aspect of an embodiment, an object of the present invention is to provide a management device, a management program, and a management method that can further improve security.

### Solution to Problem

According to a first thought, a management device includes an authentication unit that authenticates, when authentication information is received from a first device, the received authentication information by using multiple pieces of authentication information that are stored in a first storing unit, and a control unit that executes, when the authentication performed by the authentication unit is successful, a login to a second device by using a single piece of login information that is stored in a second storing unit.

According to a second thought, a management device includes an authentication unit that authenticates, when authentication information is received from a first device, the received authentication information by using multiple pieces of authentication information that are stored in a first storing unit, a control unit that executes, when the authentication performed by the authentication unit is successful, a login to a second device by using login information that is stored in a second storing unit, and a changing unit that changes the login information stored in the second storing unit when a log out of the second device is performed.

### [Advantageous Effects of Invention]

An advantage is provided in that security can be further improved.

### [Brief Description of Drawings]

FIG. 1 is a schematic diagram illustrating an example of the overall configuration of a management system in which a management device according to a first embodiment is used.
FIG. 2 is a schematic diagram illustrating the configuration of a proxy server according to a second embodiment.
FIG. 3 is a schematic diagram illustrating an example of an account table.
FIG. 4 is a schematic diagram illustrating an example of a password table.
FIG. 5 is a flowchart illustrating the flow of a login process according to the second embodiment.
FIG. 6 is a schematic diagram illustrating the configuration of a proxy server according to a third embodiment.
FIG. 7A is a schematic diagram illustrating an example of a password table before a password is changed.
FIG. 7B is a schematic diagram illustrating an example of a password table after the password has been changed.
FIG. 8 is a flowchart illustrating the flow of a login process according to the third embodiment.
FIG. 9 is a schematic diagram illustrating an example of the overall configuration of a management system in which a proxy server according to a fourth embodiment is used.
FIG. 10A is a schematic diagram illustrating an example of operation condition information.
FIG. 10B is a schematic diagram illustrating an example of operation condition information.
FIG. 11 is a schematic diagram illustrating the configuration of a proxy server according to the fourth embodiment.
FIG. 12 is a flowchart illustrating the flow of a login process according to the fourth embodiment.
FIG. 13 is a schematic diagram illustrating the configuration of a proxy server according to a fifth embodiment.
FIG. 14 is a flowchart illustrating the flow of a login process according to the fifth embodiment.
FIG. 15 is a schematic diagram illustrating a part of the configuration of a proxy server according to a sixth embodiment.
FIG. 16 is a schematic diagram illustrating an example of available operation information.
FIG. 17 is a flowchart illustrating the flow of a filtering process according to the sixth embodiment.
FIG. 18 is a schematic diagram illustrating a part of the configuration of a proxy server according to a seventh embodiment.
FIG. 19 is a flowchart illustrating the flow of a filtering process according to the seventh embodiment.
FIG. 20 is a schematic diagram illustrating an example of a setup table.

### [Embodiments for Carrying Out the Invention]

Preferred embodiments of a management device, a management program, and a management method disclosed in the present invention will be described in detail below with reference to the accompanying drawings. The present invention is not limited to these embodiment. Furthermore, the embodiments can be appropriately used in combination as long as the processes do not conflict with each other.

### [a] First Embodiment

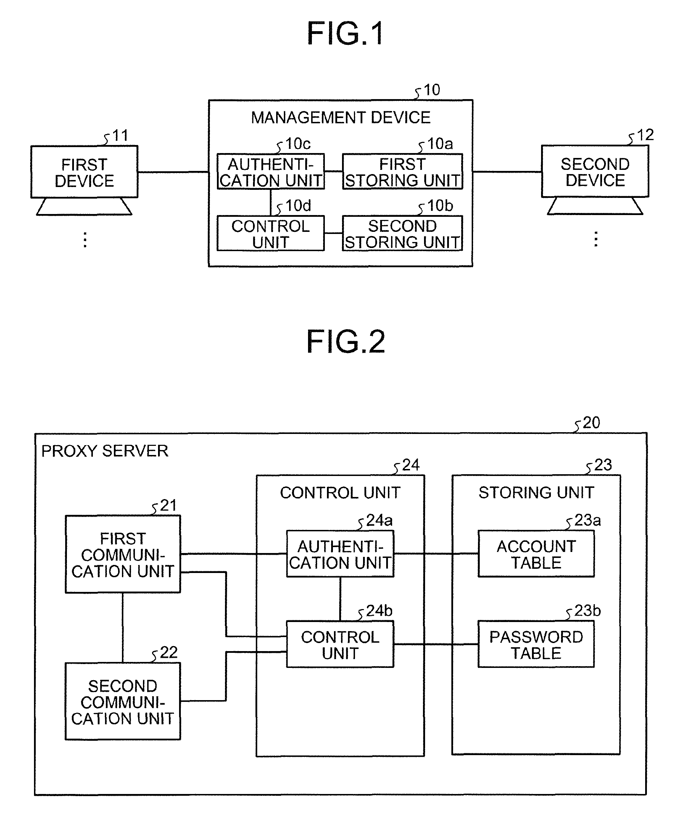

In the following, a management device according to a first embodiment will be described. FIG. 1 is a schematic diagram illustrating an example of the overall configuration of a management system in which a management device according to a first embodiment is used. As illustrated in FIG. 1, a management device 10 is connected to a first device 11 and a second device 12. In the example in FIG. 1, undefined numbers of the first devices 11 and the second devices 12 are illustrated; however, an arbitrary number of the first devices 11 and the second devices 12 may be used.

The first device 11 accepts authentication information on a user that uses the first device 11. The first device 11 sends the accepted authentication information to the management device 10. An example of a user that uses the first device 11 includes a network administrator of the system. In this case, the second device 12 is a network device, such as a switch or a router. Furthermore, another example of a user that uses the first device 11 includes an administrator of the system itself. In such a case, the second device 12 is, for example, middleware for a database; a server application, such as a authentication server; or an OS itself. Furthermore, the first device 11 is, for example, a management terminal including a personal computer (PC) that is used to manage the entirety of the management system.

As described above, an example of the second device 12 includes a network device, such as a switch and a router; middleware, such as a database; a server application, such as a authentication server; or an OS itself. The second device 12 is a device that is logged into by normal login information being input.

### [Device configuration]

The management device 10 includes a first storing unit 10a, a second storing unit 10b, and an authentication unit 10c, and a control unit 10d. The first storing unit 10a stores therein multiple pieces of authentication information on users that use the first device 11. The second storing unit 10b is login information that is used to log into the second device 12 and stores therein the login information on the second device 12. If the authentication unit 10c receives authentication information from the first device 11, the authentication unit 10c authenticates the received authentication information by using the multiple pieces of authentication information stored in the first storing unit. If the authentication performed by the authentication unit 10c is successful, the control unit 10d executes a login to the second device 12 by using a single piece of login information on the second device 12 stored in the second storing unit 10b. Specifically, the management device 10 stores therein only one piece of login information on the second device 12 and the other users mutually use this single piece of login information. Consequently, the security is high when compared with a case in which multiple pieces of login information are stored and managed.

As described above, because the management device 10 according to the first embodiment stores therein only a single piece of login information, it is possible to reduce the risk of leakage of login information when compared with a case in which multiple pieces of login information are stored and managed. Consequently, with the management device 10 according to the first embodiment, security can be further improved.

### [b] Second Embodiment

In the following, a second embodiment will be described. In the second embodiment, a description will be given of a case in which, a proxy server is used as an example of a management device. Furthermore, in the second embodiment, a description will be given of a case in which a password for the second device 12 is used as an example of login information and a case in which an account for an identification (ID) and a password of a user is used as an example of authentication information. The system configuration of the second embodiment is the same as that of the first embodiment; therefore, a description thereof will be omitted. Furthermore, components having the same configuration as those in the first embodiment are assigned the same reference numerals and descriptions of such components in detail are omitted.

Furthermore, the first device 11 according to the second embodiment communicates with a proxy server 20 by using a command, such as telnet or ssh; however, the communication method between the first device 11 and the proxy server 20 is not limited thereto and an arbitrary communication method may also be used. When a user logs into the second device 12, the user inputs, to the first device 11, an ID of a device that is targeted for the login and an account that is allocated to the user. In accordance with an instruction from the user, the first device 11 sends, to the proxy server 20, the input account together with a request for a login.

### [Configuration of a proxy server]

In the following, a proxy server according to the second embodiment will be described. FIG. 2 is a schematic diagram illustrating the configuration of a proxy server according to a second embodiment. The proxy server 20 according to the second embodiment stores therein accounts for IDs and passwords for multiple users that use the first device 11. Furthermore, the proxy server 20 according to the second embodiment stores therein a password that is used to log into the second device 12. When the proxy server 20 according to the second embodiment receives an account from the first device 11, the proxy server 20 authenticates the received account by using multiple accounts. If the authentication is successful, the proxy server 20 according to the second embodiment executes a login to the second device 12 by using a single piece of login information. As illustrated in FIG. 2, the proxy server 20 includes a first communication unit 21, a second communication unit 22, a storing unit 23, and a control unit 24.

The first communication unit 21 is a communication interface used for communication between the first device 11 and the control unit 24. For example, the first communication unit 21 receives the request, the ID of the device that is targeted for a login, and the user account sent from the first device 11, and then sends, to the control unit 24, the received request, the ID of the device that is targeted for a login, and the user account. Furthermore, the first communication unit 21 receives a message indicating an "error" or a "success", which will be described later, sent from the control unit 24 and then sends the received message to the first device 11. Consequently, an "error" message or a "success" message is reported by the first device 11.

The second communication unit 22 is a communication interface used for communication between the second device 12 and the control unit 24. For example, the second communication unit 22 receives a password sent from the control unit 24 and then sends the received password to the second device 12.

Furthermore, the first communication unit 21 is connected to the second communication unit 22. If a login to the second device 12 by a control unit 24b is successful, the first device 11 can communicate with the second device 12 via the first communication unit 21 and the second communication unit 22. The first communication unit 21 and the second communication unit 22 may be the same. For example, a single Network Interface Card (NIC) may be used for the first communication unit 21 and the second communication unit 22.

The storing unit 23 stores therein various programs executed in the control unit 24. Furthermore, the storing unit 23 stores therein an account table 23a and a password table 23b.

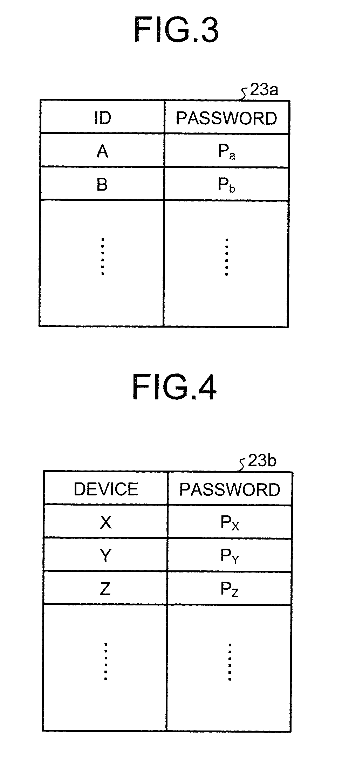

In the following, the account table 23a will be described. The account table 23a is a table in which accounts for normal users are registered. In each record in the account table 23a, a normal ID and password allocated to each user are registered for each user. The account table 23a is used when an authentication unit 24a, which will be described later, performs authentication of a user. FIG. 3 is a schematic diagram illustrating an example of an account table. In the example illustrated in FIG. 3, the ID "A" is associated with the password Pₐ for the user whose ID is A and is registered in one record in the account table 23a. Furthermore, in the example illustrated in FIG. 3, the ID "B" is associated with the password P_{b} for the user whose ID is B and is registered in one record in the account table 23a.

In the following, the password table 23b will be described. The password table 23b is a table in which passwords used for a login to the second device 12 are registered. In each record in the password table 23b, a normal password for the second device 12 is registered for each device. The password table 23b is used when the control unit 24b executes a login to the second device 12. FIG. 4 is a schematic diagram illustrating an example of a password table. In the example illustrated in FIG. 4, the password P_{X} for the second device 12 whose ID is X is registered in one record in the password table 23b. Furthermore, in the example illustrated in FIG. 4, the password P_{Y} for the second device 12 whose ID is Y is registered in one record in the password table 23b. Furthermore, in the example illustrated in FIG. 4, the password P_{Z} for the second device 12 whose ID is Z is registered in one record in the password table 23b.

The storing unit 23 is a semiconductor memory device, such as a flash memory, or a storage device, such as a hard disk or an optical disk. The storing unit 23 is not limited to this type of storage device mentioned here. For example, a random access memory (RAM) or a read only memory (ROM) may also be used.

A description will be given here by referring back to FIG. 2. The control unit 24 includes an internal memory that stores therein control data and programs that prescribe various kinds of procedures, whereby various kinds of processes are executed. As illustrated in FIG. 2, the control unit 24 includes the authentication unit 24a and the control unit 24b.

If the authentication unit 24a receives an account from the first device 11, the authentication unit 24a authenticates the received account by using multiple accounts that are stored in the account table 23a. For example, the authentication unit 24a acquires the account that has been input from the first device 11 via the first communication unit 21. The authentication unit 24a searches the account table 23a for a record that has the same ID as that of the acquired account. If the search result indicates that the target record is present, the authentication unit 24a acquires the password that is included in the target record. The authentication unit 24a compares the acquired password with a password for the acquired account and performs authentication of a user. If the acquired password matches a password for the acquired account, the authentication unit 24a determines that the authentication of the user is successful. In contrast, if the acquired password does not match a password for the acquired account, the authentication unit 24a determines that the authentication of the user has failed and then sends an "error" message indicating that the authentication has failed to the first device 11 via the first communication unit 21. Furthermore, if the search result indicates that the target record is not present, the authentication unit 24a also determines that the authentication of the user has failed and then sends an "error" message indicating that the authentication has failed to the first device 11 via the first communication unit 21.

If the authentication performed by the authentication unit 24a is successful, the control unit 24b executes a login to the second device 12 by using the password for the second device 12 stored in the password table 23b. For example, if the authentication of a user performed by the authentication unit 24a is successful, the control unit 24b searches the password table 23b for the record that has the same ID as that of the device targeted for the login. The ID targeted for the login may also be sent from the first device 11 together with login information, or alternatively, may also be selected on a menu screen or the like after a login to the management device 10 is performed. If the search result indicates that the target record is present, the control unit 24b acquires a password that is included in the target record. The control unit 24b sends the acquired password to the second communication unit 22 and then logs into the second device 12 that is indicated by the ID of the device targeted for the login. Consequently, a user that uses the first device 11 can access the first communication device 11 and can access, via the first communication unit 21 and the second communication unit 22 in the proxy server 20, the second communication device 12. Consequently, the proxy server 20 allows the user to log into the second device 12. The proxy server 20 communicates with the second device 12 by using a command, such as telnet or ssh; however, the communication method between the proxy server 20 and the second communication device 12 is not limited thereto and an arbitrary communication method may also be used.

At this point, the content registered in the password table 23b may sometimes be changed for some reason, for example, an instantaneous interruption of a power supply (not illustrated). In such a case, the content of the passwords registered in the password table 23b may be changed, thereby the normal passwords registered in the password table 23b may sometimes be changed. Accordingly, by taking into consideration this situation, the control unit 24b receives the login result from the second device 12 and determines, on the basis of the received login result, whether the login is successful. If the login is successful, the control unit 24b sends, to the first communication unit 21, a "success" message indicating that the login is successful. If the login has failed, the control unit 24b sends, to the first communication unit 21, an "error" message indicating that the login has failed. Consequently, a user can recognize an abnormality has occurred in the password table 23b. Furthermore, if the search result indicates that the target record is not present, the control unit 24b also determines that the login has failed and then sends an "error" message indicating that the login has failed to the first device 11 via the first communication unit 21.

If a log in is being performed by a user and if a request for a log in is received from another user, the authentication unit 24a or the control unit 24b can also perform an exclusive access control such that the login from that user is prohibited. In such a case, the authentication unit 24a or the control unit 24b that performs the exclusive access control may also send, to that user whose login is prohibited and who uses the first device 11 via the first communication unit 21, a message indicating that the device targeted for the login is currently being logged in.

The control unit 24 is an integrated circuit, such as an application specific integrated circuit (ASIC), a field programmable gate array (FPGA), and the like, or an electronic circuit, such as a central processing unit (CPU), a micro processing unit (MPU), and the like.

### [Flow of a process]

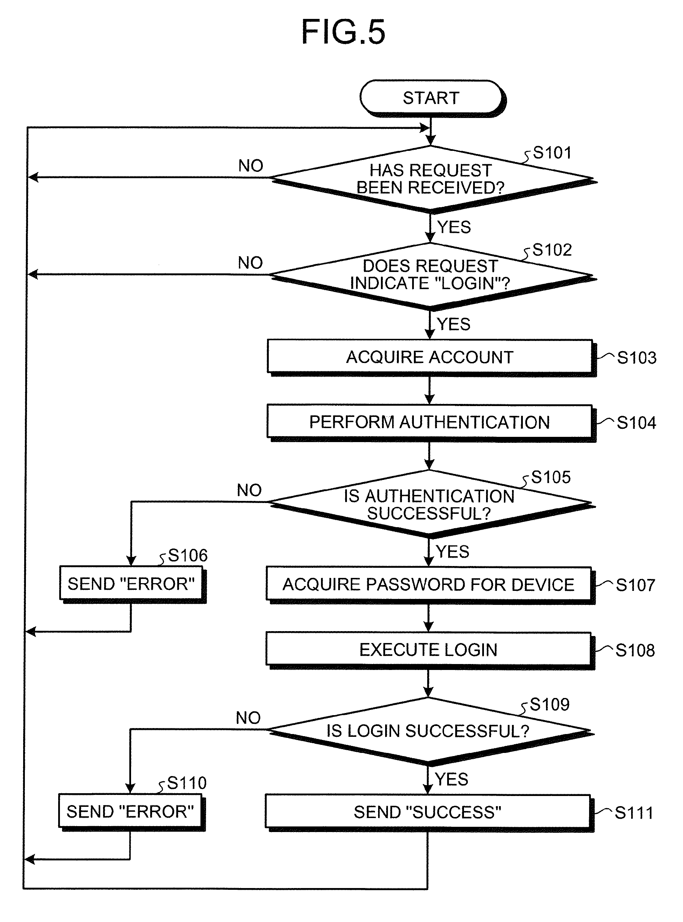

In the following, the flow of a process performed by the proxy server 20 according to the second embodiment will be described. FIG. 5 is a flowchart illustrating the flow of a login process according to the second embodiment. Various timing can be conceivable for the execution timing of this login process. For example, the login process is repeatedly performed at predetermined time intervals when the power supply of the proxy server 20 is being turned on.

As illustrated in FIG. 5, the authentication unit 24a determines whether a request has been received from the first device 11 via the first communication unit 21 (Step S101). If a request has not been received (No at Step S101), the authentication unit 24a again performs the same determination. In contrast, if a request has been received (Yes at Step S101), the authentication unit 24a determines whether the request indicates a "login" (Step S102). If the request does not indicate a "login" (No at Step S102), the authentication unit 24a returns to Step S101. In contrast, if the request indicates a "login" (Yes at Step S102), the authentication unit 24a acquires an account that has been input from the first device 11 via the first communication unit 21 (Step S103).

The authentication unit 24a compares the acquired password with a password of the acquired account and performs the authentication of a user (Step S104). The authentication unit 24a determines whether the authentication is successful (Step S105). If the authentication is not successful, i.e., the authentication has failed (No at Step S105), the authentication unit 24a sends, to the first device 11 via the first communication unit 21, an "error" message indicating that the authentication has failed (Step S106) and then returns to Step S101. In contrast, if the authentication is successful (Yes at Step S105), the control unit 24b performs the following process. Namely, the control unit 24b searches the password table 23b for a record that has the same ID as that of the device targeted for the login. If the search result indicates that the target record is present, the control unit 24b acquires the password included in the target record (Step S107).

Then, the control unit 24b sends the acquired password to the second communication unit 22 and then executes a login to the second device 12 that is indicated by the ID of the device targeted for the login (Step S108). The control unit 24b determines, on the basis of the received login result, whether the login is successful (Step S109). If the login is not successful, i.e., if the login has failed (No at Step S109), the control unit 24b sends, to the first communication unit 21, an "error" message indicating that the login has failed (Step S110) and then returns to Step S101. In contrast, if the login is successful (Yes at Step S109), the control unit 24b sends, to the first communication unit 21, a "success" message indicating that the login is successful (Step S111) and then returns to Step S101.

As described above, with the proxy server 20 according to the second embodiment, users other than a user whose account is not registered in the account table 23a fail their authentication and thus are not able to log into the second device 12. Consequently, the proxy server 20 according to the second embodiment can restrict users who can log into the second device 12.

Furthermore, with the proxy server 20 according to the second embodiment, a single password can be used for each login to each of the multiple second devices 12. In such a case, because the proxy server 20 according to the second embodiment stores therein only one piece of login information, it is possible to reduce the risk of leakage of login information when compared with a case in which multiple pieces of login information are stored and managed. Consequently, with the proxy server 20 according to the second embodiment, the security can be further improved.

### [c] Third Embodiment

In the second embodiment described above, the description thus far has been given of a case in which a password used for a login is fixed; however, the device disclosed in the present invention is not limited thereto. Accordingly, in a third embodiment, a description will be given of a case in which a password is changed.

### [Configuration of a proxy server 30]

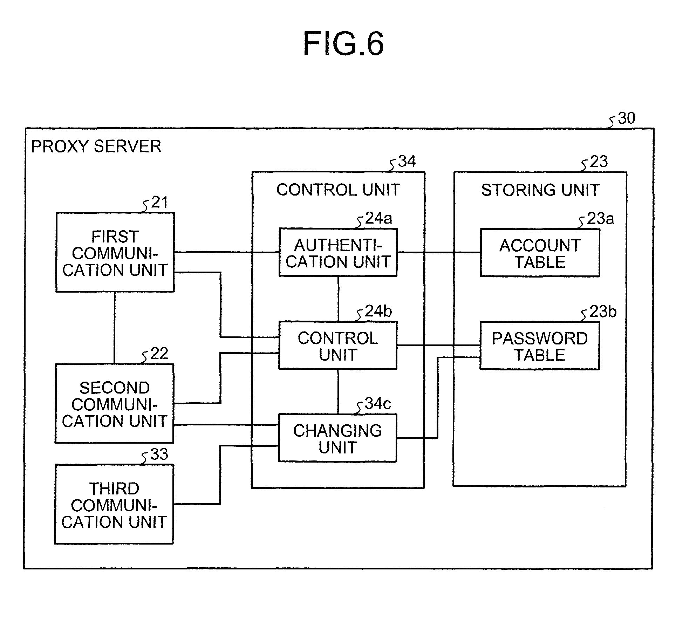

FIG. 6 is a schematic diagram illustrating the configuration of a proxy server according to a third embodiment. As illustrated in FIG. 6, the proxy server 30 newly includes a third communication unit 33 and a control unit 34. The control unit 34 in the third embodiment differs from the control unit 24 according to the second embodiment illustrated in FIG. 2 in that the control unit 34 further includes a changing unit 34c. In a description below, circuits and units having the same function as those in the second embodiment are assigned the same reference numerals illustrated in FIG. 2 and descriptions of such components are omitted.

In the embodiment, if the second device 12 receives the current password and a new password for the second device 12 from the third communication unit 33, the second device 12 changes the current password to the new password.

The third communication unit 33 is a communication interface that is used for communication between the second device 12 and the control unit 34 in order to change the password for the second device 12. For example, if the third communication unit 33 receives, from the changing unit 34c, which will be described later, the current password and a new password for the second device 12 that is targeted for a password change, the third communication unit 33 sends the current password and the new password to the second device 12 that is targeted for the password change. The third communication unit 33 is connected to, for example, a command line interface that is unique to the second device 12. Alternatively, the third communication unit 33 is a NIC and is connected to the second device 12 by using the Internet Protocol (IP). In such a case, the same NIC used for the first communication unit 21 or the second communication unit 22 may also be used for the third communication unit 33.

The changing unit 34c determines whether a user who logged into the second device 12 has logged out. For example, the changing unit 34c monitors a command sent to the second communication unit 22 from the first device 11. If a log out command is detected, the changing unit 34c determines that a user who logged into the second device 12 has logged out.

If it is determined that a log out has been performed, the changing unit 34c acquires, from the password table 23b, the password for the second device 12 from which the user logged out and then creates a new password that is different from the acquired password. For example, the changing unit 34c creates a password from pseudo random numbers that are acquired from set values, which are previously specified by an administrator of the proxy server 30, as the seed of the pseudo random numbers and then uses the created pseudo random numbers as the new password. Furthermore, the changing unit 34c may also create a password from pseudo random numbers, which are acquired from the log out time, as the seed of the pseudo random numbers, and then uses the created pseudo random numbers as the new password. Furthermore, the changing unit 34c may also create a password from pseudo random numbers, which are acquired from a combination of values between the log out time and a Mac address that is unique to the second device 12 from which the user logged out, as the seed of the pseudo random numbers, and then uses the created pseudo random numbers as the new password. In such cases, the proxy server 30 can set different passwords for the second devices 12 and centrally manage these passwords for the second devices 12.

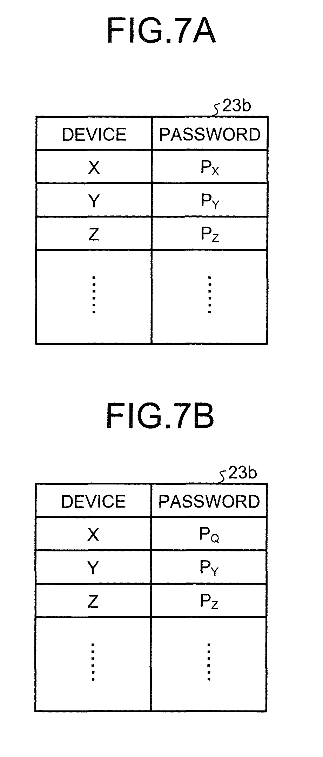

The changing unit 34c sends the created new password together with the current password to the second device 12, via the third communication unit 33, that is targeted for a password change and from which a user logged out. The changing unit 34c registers the new password in the target record in the password table 23b. FIG. 7A is a schematic diagram illustrating an example of a password table before a password is changed. FIG. 7B is a schematic diagram illustrating an example of a password table after the password has been changed. In the example illustrated in FIG. 7A, a previous password that has not been changed and that is used for the second device 12 that is targeted for a password change and whose ID is X is P_{X}. If the password is changed by the changing unit 34c, as in the example illustrated in FIG. 7B, P_{Q} is registered in the password table 23b as a new password for the second device 12 that is targeted for a password change and whose ID is X. At this point, if a log out time that is difficult for a user to analogize is used as the seed of the pseudo random numbers, it is difficult for the user to analogize the seed, and thus it is difficult for the user to analogize a password. In contrast, if set values previously specified by an administrator of the proxy server 30 are used as the seed of the pseudo random numbers, even if the password table 23b is destroyed, because the seed can be analogized by the administrator of the proxy server 30, the password for a user can be analogized. Consequently, an advantage is provided in that, even if an administrator uses values, as the seed of the pseudo random numbers, that can be analogized, a user can use the second device 12.

As described above, because the changing unit 34c changes a password every time a log out is performed, the password is changed after the log out even if a user happens to know a password for the second device 12, which reduces the success of a fraudulent act of a user. Consequently, security can be improved.

Furthermore, because the second device 12 itself does not change a password but the changing unit 34c in the proxy server 30, which is an external device of the second device 12, changes a password and updates the password table 23b, the passwords for the second devices 12 can be centrally managed.

### [Flow of a process]

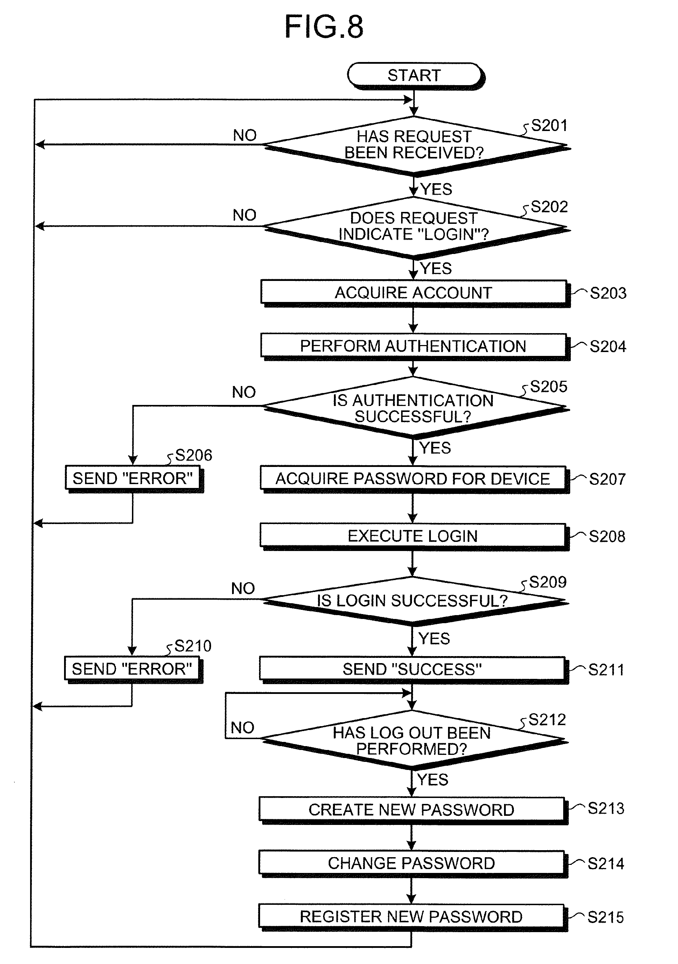

In the following, the flow of a process performed by the proxy server 30 according to the third embodiment will be described. FIG. 8 is a flowchart illustrating the flow of a login process according to the third embodiment. Various timing can be conceivable for the execution timing of this login process. For example, the login process is repeatedly performed at predetermined time intervals when the power supply of the proxy server 30 is being turned on. Furthermore, processes performed at Steps S201 to S211 are the same as those performed at Steps S101 to S111 in the login process according to the second embodiment; therefore, descriptions thereof will be omitted.

As illustrated in FIG. 8, the changing unit 34c determines whether a user who logged into the second device 12 has logged out from the second device 12 (Step S212). If the user has logged out from the second device 12 (Yes at Step S212), the changing unit 34c creates a new password from the password for the second device 12 from which the user has logged out (Step S213). The changing unit 34c sends the created new password together with the current password to the second device 12, via the third communication unit 33, that is targeted for a password change and from which the user logged out (Step S214). The changing unit 34c registers the new password in the target record in the password table 23b (Step S215) and then returns to Step S201.

As described above, with the proxy server 30 according the third embodiment, users other than a user whose account is not registered in the account table 23a fail their authentication and thus are not able to log into the second device 12. Consequently, the proxy server 30 according to the third embodiment can restrict users who can log into the second device 12.

Furthermore, the proxy server 30 according the third embodiment changes a password every time a log out is performed. Consequently, even if a user happens to know a password for the second device 12, because the password is changed after a log out, it is possible to reduce the success of a fraudulent act of the user. Consequently, with the proxy server 30 according the third embodiment, security can be improved.

Furthermore, the proxy server 30 according the third embodiment changes a password and updates the password table 23b. Consequently, with the proxy server 30 according the third embodiment, the passwords for the second devices 12 can be centrally managed.

Furthermore, with the proxy server 30 according the third embodiment, a single password can be used for each login to each of the multiple second devices 12. In such a case, because the proxy server 30 according the third embodiment stores therein only one piece of login information, it is possible to reduce the risk of leakage of login information when compared with a case in which multiple pieces of login information are stored and managed. Consequently, with the proxy server 30 according the third embodiment, security can be further improved.

### [d] Fourth Embodiment

In the second and the third embodiments described above, the description thus far has been given of a case in which a user is authenticated on the basis of an account received by a proxy server and an account stored in the proxy server; however, the device disclosed in the present invention is not limited thereto. Accordingly, in a fourth embodiment, a description will be given of a case in which a user is authenticated by taking into consideration an operation condition indicated by operation condition information that is acquired from an operation management server.

### [System configuration]

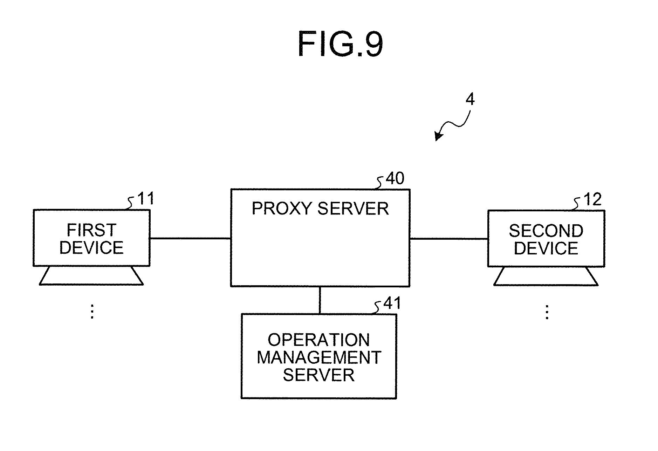

In the following, a management system according to the fourth embodiment will be described. FIG. 9 is a schematic diagram illustrating an example of the overall configuration of a management system in which a proxy server according to a fourth embodiment is used. As illustrated in FIG. 9, in addition to the first device 11 and the second device 12, a management system 4 includes a proxy server 40 and an operation management server 41.

The operation management server 41 is in a system other than the management system 4 and is a server that is used to control a workflow that supports a task performed by the management system 4. Furthermore, the operation management server 41 stores therein operation condition information that is information on an operation condition in which a person who can log into the second device 12 is defined. The operation management server 41 determines whether a login to the second device 12 is approved on the basis of the operation condition information. Furthermore, the operation management server 41 may also be a server that is other than the server that controls a workflow as long as it is a system server that cooperates with the management system 4.

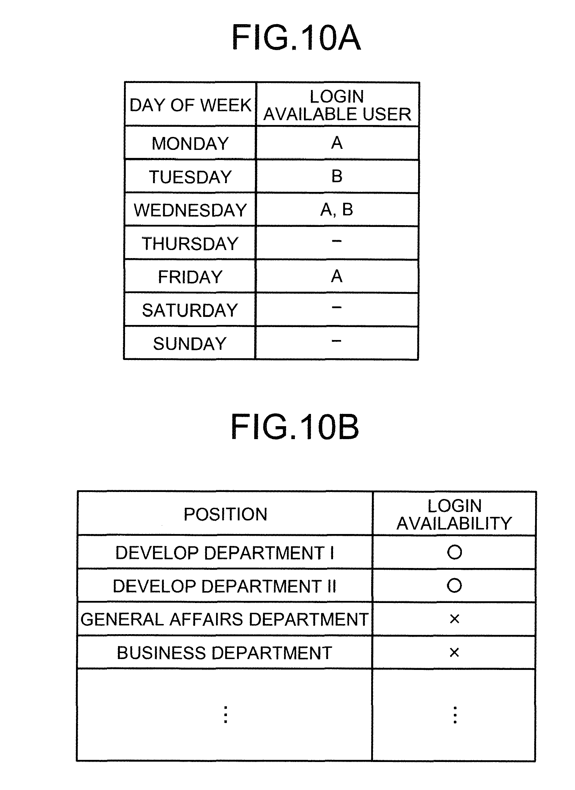

FIG. 10A is a schematic diagram illustrating an example of operation condition information. The example illustrated in FIG. 10A indicates that a person A can log into the second device 12 on Monday. The example illustrated in FIG. 10A indicates that a person B can log into the second device 12 on Tuesday. The example illustrated in FIG. 10A indicates that the persons A and B can log into the second device 12 on Wednesday. The example illustrated in FIG. 10A indicates that no one can log into the second device 12 on Thursday. The example illustrated in FIG. 10A indicates that the person A can log into the second device 12 on Friday. The example illustrated in FIG. 10A indicates that no one can log into the second device 12 on Saturday. The example illustrated in FIG. 10A indicates that no one can log into the second device 12 on Sunday.

FIG. 10B is a schematic diagram illustrating an example of operation condition information. The example illustrated in FIG. 10B indicates that a person who belongs to the develop department I can log into the second device 12. The example illustrated in FIG. 10B indicates that a person who belongs to the develop department II can log into the second device 12. The example illustrated in FIG. 10B indicates that a person who belongs to the general affairs department is not able to log into the second device 12. The example illustrated in FIG. 10B indicates that a person who belongs to the business department is not able to log into the second device 12.

However, the operation condition information is not limited to the above examples. For example, it may also be possible to use the operation condition information in which a person who is permitted/not permitted to log into the second device 12 is defined for each department. Furthermore, it may also be possible to use the operation condition information in which the time period during which a login to the second device 12 is permitted is defined for each person.

### [Configuration of the proxy server 40]

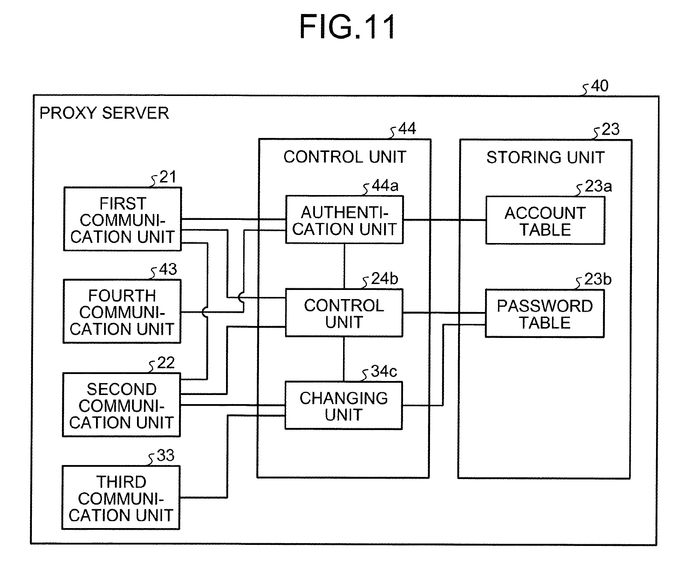

FIG. 11 is a schematic diagram illustrating the configuration of a proxy server according to the fourth embodiment. As illustrated in FIG. 11, the proxy server 40 newly includes a fourth communication unit 43 and a control unit 44. The control unit 44 according to the fourth embodiment differs from the control unit 34 according to the third embodiment illustrated in FIG. 6 in that the control unit 44 includes an authentication unit 44a instead of the authentication unit 24a. In a description below, circuits and units having the same function as those in the second and the third embodiments are assigned the same reference numerals illustrated in FIGS. 2 and 6 and descriptions of such components are omitted.

The fourth communication unit 43 is a communication interface used for communication between the operation management server 41 and the control unit 44. For example, if the fourth communication unit 43 receives operation condition information from the operation management server 41, the fourth communication unit 43 sends the received operation condition information to the control unit 44. The fourth communication unit 43 may be integrated with the first communication unit 21, the second communication unit 22, and the third communication unit 33. For example, a single NIC may be used for the first communication unit 21, the second communication unit 22, the third communication unit 33, and the fourth communication unit 43.

The authentication unit 44a authenticates a user on the basis of operation condition information on the second device 12, an account received from the first device 11, and the accounts registered in the account table 23a stored in the storing unit 23. For example, the authentication unit 44a acquires an account that is input from the first device 11 via the first communication unit 21. The authentication unit 44a searches the account table 23a for a record that has the same ID as that of the acquired account. If the search result indicates that the target record is present, the authentication unit 44a acquires a password that is included in the target record. The authentication unit 44a acquires operation condition information from the operation management server 41 via the fourth communication unit 43. For a user that matches the operation condition indicated by the operation condition information, the authentication unit 44a compares the acquired password with a password for the acquired account by taking into consideration the operation condition information and then authenticates the user. The authentication unit 44a does not authenticate a user who does not match the operation condition indicated by the operation condition information. A case in which "a user matches the operation condition" mentioned here is a case in which a user can log into the second device 12 that is targeted for a login. Furthermore, a case in which "a user does not match the operation condition" mentioned here is a case in which a user is not able to log into the second device 12 that is targeted for a login.

For a user who matches the operation condition, if the acquired password matches a password for the acquired account, the authentication unit 44a determines that the authentication of the user is successful. In contrast, for a user who matches the operation condition, if the acquired password does not match a password for the acquired account or if a user does not match the operation condition, the authentication unit 44a performs the following process. Namely, the authentication unit 44a determines that the authentication of the user has failed and then sends, to the first device 11 via the first communication unit 21, an "error" message indicating that the authentication has failed or the user does not match the operation condition. Furthermore, if the search result indicates that the target record is not present, the authentication unit 44a also determines that the authentication of the target user has failed and then sends, to the first device 11 via the first communication unit 21, an "error" message indicating that the authentication has failed.

As described above, for a user that matches the operation condition indicated by the operation condition information related to another workflow in the system, the authentication unit 44a attempts to authenticate the user in order to allow the user to log into the second device 12. In contrast, for a user who does not match the operation condition, the authentication unit 44a does not perform the authentication of the user and thus does not allow the user to log into the second device 12. Consequently, the authentication unit 44a performs a login for a user in cooperation with the other workflow in the system.

Furthermore, as the operation condition illustrated in the example in FIG. 10A, if the control unit 24b defines the availability of a login for a user by using the date and time or the time period, the following setting may also be used. Namely, for a time period in which a user is not able to log into a device, an authentication password that is not reported to a user is reset, in the account table 23a, to another password that is impossible to be authenticated. This makes the authentication of a user unsuccessful, and thus, the user is not allowed to log into the second device 12.

### [Flow of a process]

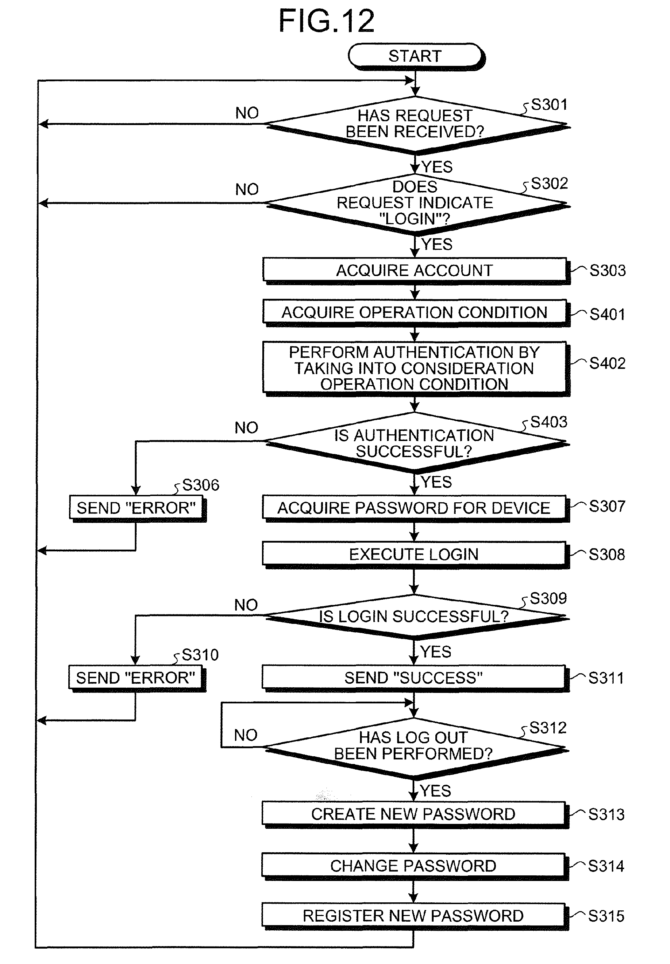

In the following, the flow of a process performed by the proxy server 40 according to the fourth embodiment will be described. FIG. 12 is a flowchart illustrating the flow of a login process according to the fourth embodiment. Various timing can be conceivable for the execution timing of this login process. For example, the login process is repeatedly performed at predetermined time intervals when the power supply of the proxy server 40 is being turned on. Furthermore, processes performed at Steps S301 to S303 and S306 to S315 are the same as those performed at Steps Step S201 to S203 and S206 to S215 in the login process according to the third embodiment; therefore, descriptions thereof will be omitted.

As illustrated in FIG. 12, the authentication unit 44a acquires operation condition information from the operation management server 41 via the fourth communication unit 43 (Step S401). For a user that matches the operation condition indicated by the operation condition information, the authentication unit 44a compares, by taking into consideration the operation condition information, the acquired password with a password for the acquired account and then performs the authentication of the user (Step S402). At Step S402, for a user who does not match the operation condition indicated by the operation condition information, the authentication unit 44a does not perform the authentication of the user. The authentication unit 44a determines whether the authentication is successful (Step S403). If the authentication has failed (No at Step S403), the authentication unit 44a proceeds to Step S306. In contrast, if the authentication is successful (Yes at Step S403), the authentication unit 44a proceeds to Step S307.

As described above, with the proxy server 40 according to the fourth embodiment, users other than a user whose account is not registered in the account table 23a fail their authentication and thus are not able to log into the second device 12. Consequently, the proxy server 40 according to the fourth embodiment can restrict users who can log into the second device 12.

Furthermore, the proxy server 40 according to the fourth embodiment changes a password every time a log out is performed. Consequently, even if a user happens to know a password for the second device 12, because the password is changed after a log out, it is possible to reduce the success of a fraudulent act of the user. Consequently, with the proxy server 40 according to the fourth embodiment, security can be improved.

Furthermore, the proxy server 40 according to the fourth embodiment changes a password and updates the password table 23b. Consequently, with the proxy server 40 according to the fourth embodiment, the passwords for the second devices 12 can be centrally managed.

Furthermore, for a user that matches the operation condition indicated by the operation condition information related to another workflow in the system, the proxy server 40 according to the fourth embodiment attempts to authenticates the user in order to allow the user to log into the second device 12. In contrast, for a user who does not match the operation condition, the proxy server 40 according to the fourth embodiment does not perform the authentication of the user and thus does not allow the user to log into the second device 12. As described above, the proxy server 40 according to the fourth embodiment performs the authentication by further using a predetermined operation condition related to the second device. Consequently, the proxy server 40 according to the fourth embodiment performs a login for a user in cooperation with the other workflow in the system.

Furthermore, with the proxy server 40 according to the fourth embodiment, a single password can be used for each login to each of the multiple second devices 12. In such a case, because the proxy server 40 according to the fourth embodiment stores therein only one piece of login information, it is possible to reduce the risk of leakage of login information when compared with a case in which multiple pieces of login information are stored and managed. Consequently, with the proxy server 40 according to the fourth embodiment, security can be further improved.

### [e] Fifth Embodiment

In the fourth embodiment, the description thus far has been given of a case in which a user is authenticated by taking into consideration the operation condition indicated by the operation condition information that is acquired from the operation management server; however, the device disclosed in the present invention is not limited thereto. Accordingly, in a fifth embodiment, a description will be given of a case in which a user is allowed to log into the second device 12 by taking into consideration the operation condition indicated by the operation condition information that is acquired from the operation management server. The system configuration of the fifth embodiment is the same as that of the fourth embodiment; therefore, a description thereof will be omitted.

### [Configuration of a proxy server 50]

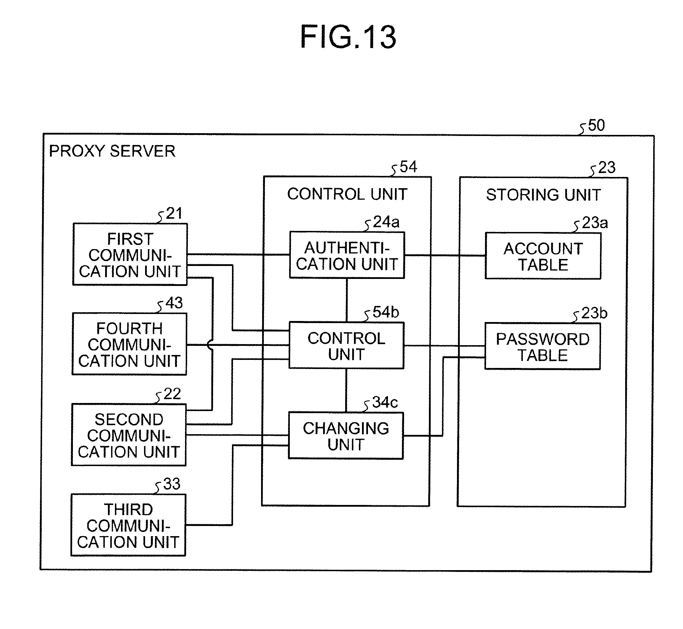

FIG. 13 is a schematic diagram illustrating the configuration of a proxy server according to a fifth embodiment. As illustrated in FIG. 13, a proxy server 50 newly includes a control unit 54. The control unit 54 according to the fifth embodiment differs from the control unit 44 according to the fourth embodiment illustrated in FIG. 11 in that the control unit 54 includes, instead of the authentication unit 44a, the authentication unit 24a according to the third embodiment and includes, instead of the control unit 24b, a control unit 54b. In a description below, circuits and units having the same function as those in the second, the third, and the fourth embodiments are assigned the same reference numerals illustrated in FIGS. 2, 6 , and 11 and descriptions of such components are omitted.

If a predetermined operation condition related to the second device 12 is satisfied, the control unit 54b executes a login to the second device 12 by using a password. For example, if the authentication of a user is successful in the authentication unit 24a, the control unit 54b acquires operation condition information from the operation management server 41 via the fourth communication unit 43. The control unit 54b determines whether the user matches the operation condition indicated by the operation condition information. If the user does not match the operation condition, the control unit 54b sends an "error" message indicating that the user does not match the operation condition to the first device 11 via the first communication unit 21. In contrast, if the user matches the operation condition, the control unit 54b searches the password table 23b for a record that has the same ID as that of the device targeted for a login. If the search result indicates that the target record is present, the control unit 54b acquires a password that is included in the target record. The control unit 54b sends the acquired password to the second communication unit 22 and executes a login to the second device 12 that is indicated by the ID of the device that is targeted for the login.

The control unit 54b receives the login result from the second device 12 and then determines, on the basis of the received login result, whether the login is successful. If the login is successful, the control unit 54b sends a "success" message indicating that the login is successful to the first communication unit 21. If the login has failed, the control unit 54b sends an "error" message indicating that the login has failed to the first communication unit 21. Furthermore, if the search result indicates that the target record is not present, the control unit 54b also determines that the login has failed and then sends an "error" message indicating that the login has failed to the first device 11 via the first communication unit 21.

As described above, if a user matches the operation condition indicated by the operation condition information related to another workflow in the system and if the authentication of the user is successful, the control unit 54b attempts to allow the user to log into the second device 12 by using a password. In contrast, if a user does not match the operation condition, the control unit 54b does not allow the user to log into the second device 12. Consequently, according to the control unit 54b can execute a login for a user in cooperation with the other workflow in the system.

Furthermore, as the operation condition illustrated in the example in FIG. 10A, if the control unit 24b defines the availability of a login for a user by using the date and time or the time period, the following setting may also be used. Namely, for a time period in which a user is not able to log into a device, a password for the second device 12 is reset, in the account table 23a, to another password that is impossible to be authenticated, and thereby the user is not allowed to log into the second device 12.

### [Flow of a process]

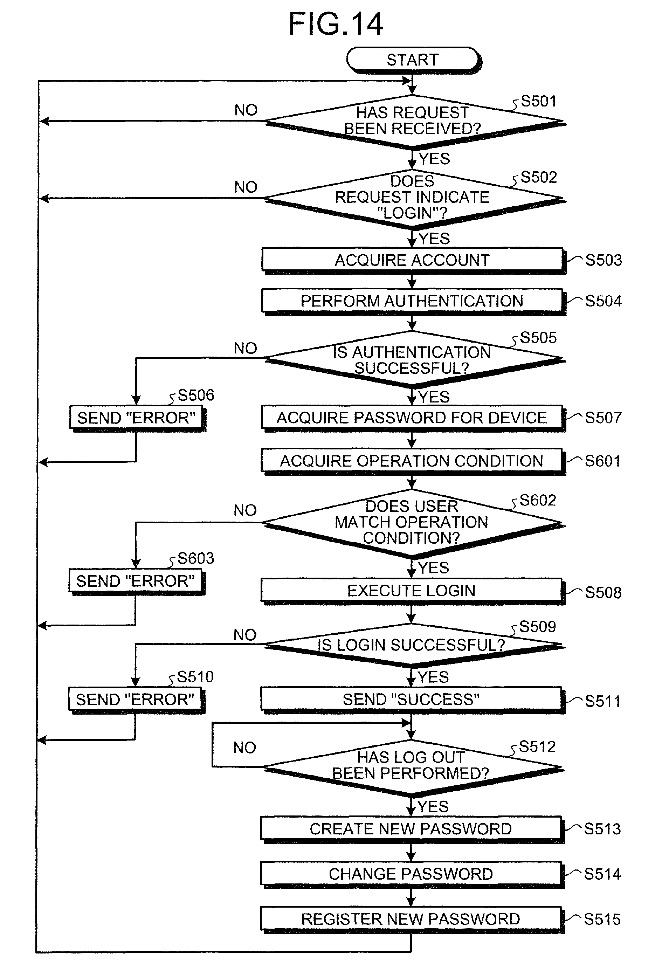

In the following, the flow of a process performed by the proxy server 50 according to the fifth embodiment will be described. FIG. 14 is a flowchart illustrating the flow of a login process according to the fifth embodiment. Various timing can be conceivable for the execution timing of this login process. For example, the login process is repeatedly performed at predetermined time intervals when the power supply of the proxy server 50 is being turned on. Furthermore, processes performed at Steps S501 to S515 are the same as those performed at Steps S201 to S215 in the login process according to the third embodiment; therefore, descriptions thereof will be omitted.

As illustrated in FIG. 14, the control unit 54b acquires operation condition information from the operation management server 41 via the fourth communication unit 43 (Step S601). The control unit 54b determines whether a user matches the operation condition indicated by the operation condition information (Step S602). If a user does not match the operation condition (No at Step S602), the control unit 54b sends an "error" message indicating that the user does not match the operation condition to the first device 11 via the first communication unit 21 (Step S603). In contrast, if the user matches the operation condition (Yes at Step S602), the control unit 54b proceeds to Step S508.

As described above, with the proxy server 50 according to the fifth embodiment, users other than a user whose account is not registered in the account table 23a fail their authentication and thus are not able to log into the second device 12. Consequently, the proxy server 50 according to the fifth embodiment can restrict users who can log into the second device 12.

Furthermore, the proxy server 50 according to the fifth embodiment changes a password every time a log out is performed. Consequently, even if a user happens to know a password for the second device 12, because the password is changed after a log out, it is possible to reduce the success of a fraudulent act of the user. Consequently, with the proxy server 50 according to the fifth embodiment, security can be improved.

Furthermore, the proxy server 50 according to the fifth embodiment changes a password and updates the password table 23b. Consequently, with the proxy server 50 according to the fifth embodiment, the passwords for the second devices 12 can be centrally managed.

Furthermore, if a predetermined operation condition related to the second device 12 is satisfied, the proxy server 50 according to the fifth embodiment allows a user to log into the second device 12 by using a password. For example, for a user that matches the operation condition indicated by the operation condition information related to another workflow in the system, the proxy server 50 according to the fifth embodiment attempts to allow the user to log into the second device 12. In contrast, for a user who does not match the operation condition, the proxy server 50 according to the fifth embodiment does not allow the user to log into the second device 12. Consequently, the proxy server 50 according to the fifth embodiment performs a login for a user in cooperation with the other workflow in the system.

Furthermore, with the proxy server 50 according to the fifth embodiment, a single password can be used for each login to each of the multiple second devices 12. In such a case, because the proxy server 50 according to the fifth embodiment stores therein only one piece of login information, it is possible to reduce the risk of leakage of login information when compared with a case in which multiple pieces of login information are stored and managed. Consequently, with the proxy server 50 according to the fifth embodiment, security can be further improved.

### [f] Sixth Embodiment

In a sixth embodiment, a description will be given of a case in which, if it is determined, on the basis of information on a command that can be operated by a user, that a command that is input from the first device 11 can be operated by a user, the command is issued to the second device 12.

Furthermore, in the sixth embodiment, the first device 11 accepts the operation from a user and then sends a request for a "command" to a proxy server. ExampleS of the command include "read" for reading a file, "copy" for copying a file, "delete" for deleting a file, and the like.

### [System configuration]

In the following, a management system according to the sixth embodiment will be described. The system configuration of the management system according to the sixth embodiment is the same as that any one of the first to the fifth embodiments; therefore, a description thereof will be omitted.

### [Configuration of a proxy server 60]

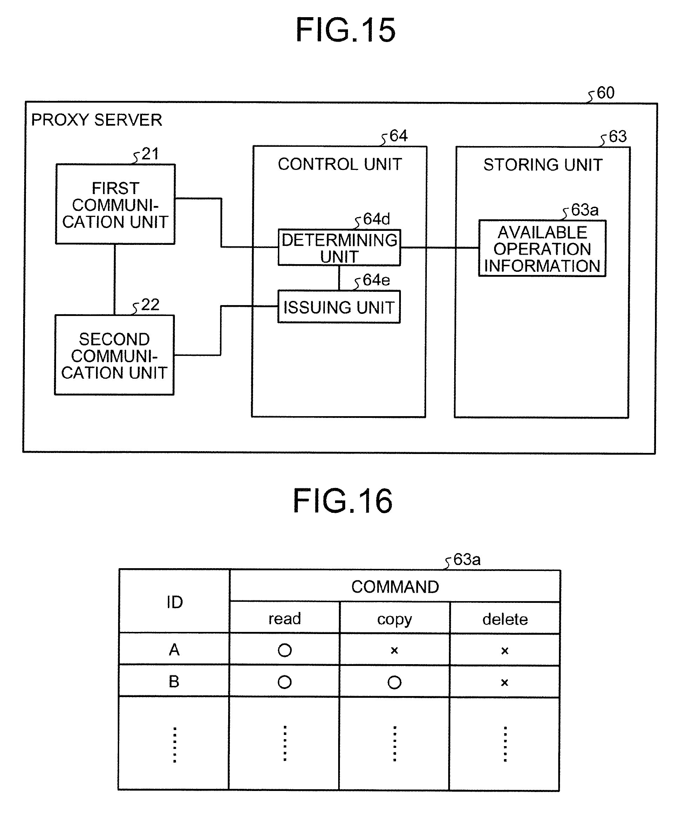

FIG. 15 is a schematic diagram illustrating a part of the configuration of a proxy server according to the sixth embodiment. The proxy server 60 illustrated in FIG. 15 includes a storing unit 63 and a control unit 64. In addition to the function and the configuration of the management device 10 according to the first embodiment or in addition to the function and the configuration of the proxy server according to one of the second to the fifth embodiments, in the proxy server 60 in the sixth embodiment, the control unit 64 newly includes a determining unit 64d and an issuing unit 64e and the storing unit 63 newly includes an available operation information 63a. In a description below, circuits and units having the same function as those in the first to the fifth embodiments are assigned the same reference numerals illustrated in FIGS. 1, 2, 6, 11, and 13 and descriptions of such components are omitted.

In the following, the available operation information 63a will be described. The available operation information 63a is information in which commands that can be executed by a user and commands that are not able to be executed by a user are defined for each user. FIG. 16 is a schematic diagram illustrating an example of available operation information. The example illustrated in FIG. 16 indicates that the user whose ID is A can executes the "read" command but is not able to execute the "copy" command nor the "delete" command. Furthermore, the example illustrated in FIG. 16 indicates that the user whose ID is B can execute the "read" command and the "copy" command but is not able to execute the "delete" command.

The determining unit 64d determines whether a request received via the first communication unit 21 is a "command". If it is determined that the request is a command, the determining unit 64d reads the available operation information 63a. The determining unit 64d specifies, from the read available operation information 63a, a record that includes the ID of a user who requested the "command" and then acquires, from the specified record, information indicating whether the command received as a request can be executed. The determining unit 64d determines, on the basis of the acquired information, whether the user can execute the command.

If the determining unit 64d determines that the command can be issued, the issuing unit 64e issues an operation command to the second device 12. For example, if the determination result performed by the determining unit 64d indicates that the command is not able to be executed, the issuing unit 64e sends an "error" message indicating that a user is not able to execute the command to the first device 11 via the first communication unit 21. In contrast, if a user can execute the command, the issuing unit 64e issues the command to the second device 12.

As described above, on the basis of the available operation information 63a, for a command that can be executed by a user, the issuing unit 64e issues the command to the second device 12, and, for a command that is not able to be executed by a user, the issuing unit 64e does not issue the command. Consequently, with the issuing unit 64e, it is possible to perform filtering of commands for each user.

### [Flow of a process]

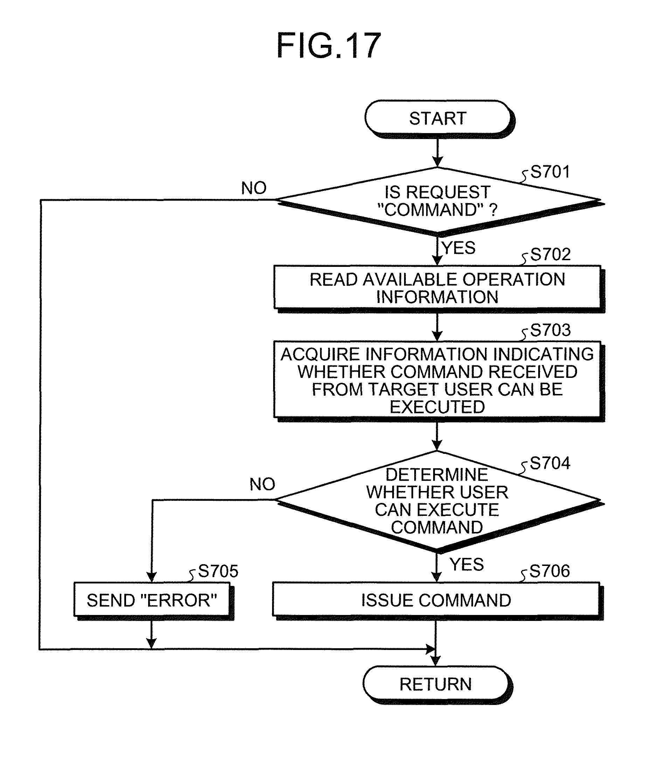

In the following, the flow of a process performed by the proxy server 60 according to the sixth embodiment will be described. FIG. 17 is a flowchart illustrating the flow of a filtering process according to the sixth embodiment. This filtering process is an interrupt process. Various timing can be conceivable for the execution timing of this filtering process. For example, the filtering process is performed if a negative determination is obtained at Step S102 illustrated in FIG. 5, at Step S202 illustrated in FIG. 8, at Step S302 illustrated in FIG. 12, at Step S502 illustrated in FIG. 14, and the like.

As illustrated in FIG. 17, the determining unit 64d determines whether the request received via the first communication unit 21 is a "command" (Step S701). If it is determined that the request is not a command (No at Step S701), the determining unit 64d returns. In contrast, if it is determined that the request is a command (Yes at Step S701), the determining unit 64d reads the available operation information 63a (Step S702). The determining unit 64d specifies, from the read available operation information 63a, a record that includes the ID of a user who requested the "command" and then acquires, from the specified record, information indicating whether the command received as a request can be executed (Step S703). On the basis of the acquired information, the determining unit 64d determines whether the user can execute the command (Step S704). If it is determined that the user is not able to execute the command (No at Step S704), the issuing unit 64e sends an "error" message indicating that the user is not able to execute the command (Step S705) to the first device 11 via the first communication unit 21. In contrast, if it is determined that the user can execute the command (Yes at Step S704), the issuing unit 64e issues the command to the second device 12 (Step S706) and then returns.

As described above, with the proxy server 60 according to the sixth embodiment, users other than a user whose account is not registered in the account table 23a fail their authentication and thus are not able to log into the second device 12. Consequently, the proxy server 60 according to the sixth embodiment can restrict users who can log into the second device 12.

Furthermore, the proxy server 60 according to the sixth embodiment changes a password every time a log out is performed. Consequently, even if a user happens to know a password for the second device 12, because the password is changed after a log out, it is possible to reduce the success of a fraudulent act of the user. Consequently, with the proxy server 60 according to the sixth embodiment, security can be improved.

Furthermore, the proxy server 60 according to the sixth embodiment changes a password and updates the password table 23b. Consequently, with the proxy server 60 according to the sixth embodiment, the passwords for the second devices 12 can be centrally managed.

Furthermore, if a predetermined operation condition related to the second device 12 is satisfied, the proxy server 60 according to the sixth embodiment allows a user to log into the second device 12 by using a password. For example, for a user that matches the operation condition indicated by the operation condition information related to another workflow in the system, the proxy server 60 according to the sixth embodiment attempts to allow the user to log into the second device 12. In contrast, for a user who does not match the operation condition, the proxy server 60 according to the sixth embodiment does not allow the user to log into the second device 12. Consequently, the proxy server 60 according to the sixth embodiment performs a login for a user in cooperation with the other workflow in the system.

Furthermore, if the proxy server 60 according to the sixth embodiment receives a request for issuing an operation command for the second device 12 from the first device 11 after a login, the proxy server 60 determines whether the operation command can be issued on the basis of an issue condition that is stored by being associated with an account. If it is determined that the operation command can be issued, the proxy server 60 according to the sixth embodiment issues the operation command to the second device 12. Consequently, the proxy server 60 according to the sixth embodiment can perform filtering on commands for each user.

Furthermore, with the proxy server 60 according to the sixth embodiment, a single password can be used for each login to the each of multiple second devices 12. In such a case, because the proxy server 60 according to the sixth embodiment stores therein only one piece of login information, it is possible to reduce the risk of leakage of login information when compared with a case in which multiple pieces of login information are stored and managed. Consequently, with the proxy server 60 according to the sixth embodiment, security can be further improved.

### [g] Seventh Embodiment

In the sixth embodiment described above, the description thus far has been given of a case in which filtering is performed on commands on the basis of the available operation information 63a; however, the device disclosed in the present invention is not limited thereto. Accordingly, in a seventh embodiment, a description will be given of a case in which filtering is performed on commands by taking into consideration the operation condition indicated by the operation condition information acquired from the operation management server.

### [System configuration]

In the following, a management system according to the seventh embodiment will be described. The system configuration of the management system according to the seventh embodiment is the same as that of the fourth or the fifth embodiment; therefore, a description thereof will be omitted.

### [Configuration of a proxy server 70]

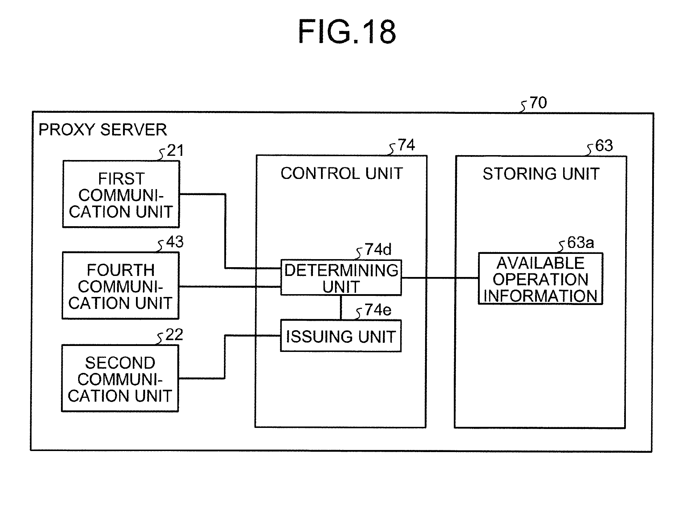

FIG. 18 is a schematic diagram illustrating a part of the configuration of a proxy server according to the seventh embodiment. The proxy server 70 illustrated in FIG. 18 includes the storing unit 63 and a control unit 74. In addition to the function and the configuration of the proxy server according to one of the fourth and the fifth embodiments, in the proxy server 70, the control unit 74 newly includes a determining unit 74d and an issuing unit 74e. Furthermore, similarly to the sixth embodiment, the storing unit 63 stores therein the available operation information 63a. In the following, circuits and units having the same function as those in the fourth, the fifth, and the sixth embodiments are assigned the same reference numerals illustrated in FIGS. 11, 13, and 15 and descriptions of such components are omitted.

In addition to the issue condition that is stored by being associated with an account, the determining unit 74d determines whether an operation command can be issued by further using a predetermined operation condition related to the second device 12. For example, the determining unit 74d determines whether the request received via the first communication unit 21 is a "command". If it is determined that the request is a command, the determining unit 74d acquires operation condition information from the operation management server 41 via the fourth communication unit 43. The determining unit 74d determines whether a user matches the operation condition indicated by the operation condition information. If it is determined that the user does not match the operation condition, the determining unit 74d sends an "error" message indicating that the user does not match the operation condition to the first device 11 via the first communication unit 21. In contrast, it is determined that the user matches the operation condition, the determining unit 74d reads the available operation information 63a. The determining unit 74d specifies, from the read available operation information 63a, a record that includes the ID of the user who requested the "command" and then acquires, from the specified record, information indicating whether the command received as the request can be executed. On the basis of the acquired information, the determining unit 74d determines whether the user can execute the command. If it is determined that the user is not able to execute the command, the issuing unit 74e sends an "error" message indicating that the user is not able to execute the command to the first device 11 via the first communication unit 21. In contrast, if it is determined that the user can execute the command, the issuing unit 74e issues the command to the second device 12.

As described above, on the basis of the issue condition that is stored by being associated with an account, the determining unit 74d determines whether an operation command can be issued. If it is determined that the operation command can be issued, the issuing unit 74e issues the operation command to the second device 12. Consequently, the determining unit 74d and the issuing unit 74e can perform filtering on commands in accordance with information indicating, for each user, whether a command can be executed and in cooperation with the other workflow in the system.

### [Flow of a process]

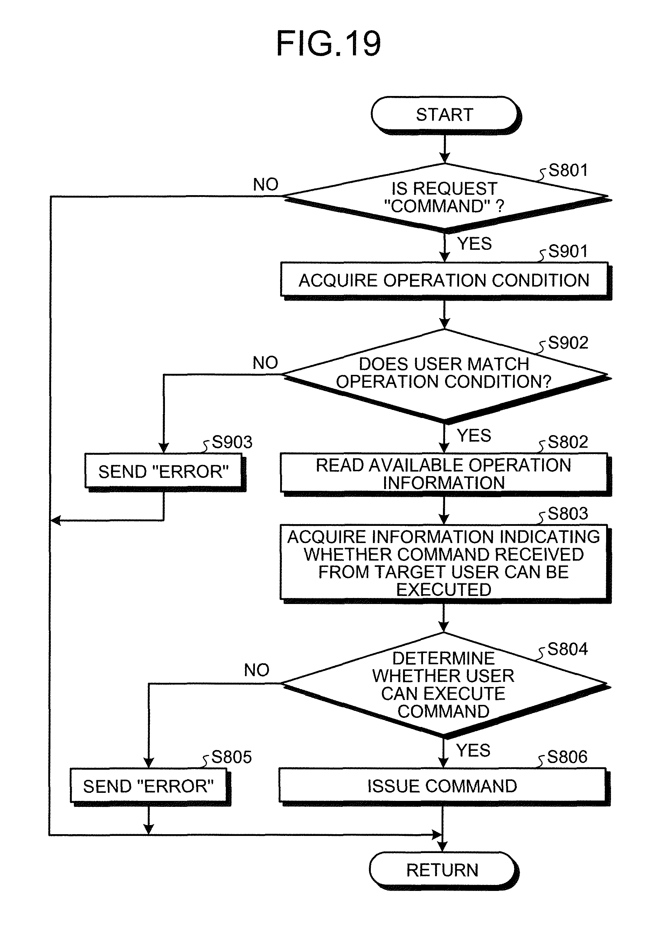

In the following, the flow of a process performed by the proxy server 70 according to the seventh embodiment will be described. FIG. 19 is a flowchart illustrating the flow of a filtering process according to the seventh embodiment. This filtering process is an interrupt process. Various timing can be conceivable for the execution timing of this filtering process. For example, the filtering process is performed if a negative determination is obtained at Step S302 illustrated in FIG. 12, at Step S502 illustrated in FIG. 14, and the like. The processes performed at Steps S801 to S806 are the same as those performed at Steps S701 to S706 in the filtering process according to the sixth embodiment; therefore, descriptions thereof will be omitted.

As illustrated in FIG. 19, the determining unit 74d acquires operation condition information from the operation management server 41 via the fourth communication unit 43 (Step S901). The determining unit 74d determines whether a user matches the operation condition indicated by the operation condition information (Step S902). If it is determined that the user does not match the operation condition (No at Step S902), the determining unit 74d sends an "error" message indicating that the user does not match the operation condition to the first device 11 via the first communication unit 21 (Step S903). In contrast, if it is determined that the user matches the operation condition (Yes at Step S902), the determining unit 74d proceeds to Step S802.

As described above, with the proxy server 70 according to the seventh embodiment, users other than a user whose account is not registered in the account table 23a fail their authentication and thus are not able to log into the second device 12. Consequently, the proxy server 70 according to the seventh embodiment can restrict users who can log into the second device 12.

Furthermore, the proxy server 70 according to the seventh embodiment changes a password every time a log out is performed. Consequently, even if a user happens to know a password for the second device 12, because the password is changed after a log out, it is possible to reduce the success of a fraudulent act of the user. Consequently, with the proxy server 70 according to the seventh embodiment, security can be improved.

Furthermore, the proxy server 70 according to the seventh embodiment changes a password and updates the password table 23b. Consequently, with the proxy server 70 according to the seventh embodiment, the passwords for the second devices 12 can be centrally managed.

Furthermore, if a predetermined operation condition related to the second device 12 is satisfied, the proxy server 70 according to the seventh embodiment allows a user to log into the second device 12 by using a password. For example, for a user that matches the operation condition indicated by the operation condition information related to another workflow in the system, the proxy server 70 according to the seventh embodiment attempts to allow the user to log into the second device 12. In contrast, for a user who does not match the operation condition, the proxy server 70 according to the seventh embodiment does not allow the user to log into the second device 12. Consequently, the proxy server 70 according to the seventh embodiment performs a login for a user in cooperation with the other workflow in the system.

Furthermore, if the proxy server 70 according to the seventh embodiment receives a request for issuing an operation command for the second device 12 from the first device 11 after a login, the proxy server 70 determines whether the operation command can be issued on the basis of an issue condition that is stored by bing associated with an account. If it is determined that the operation command can be issued, the proxy server 70 according to the seventh embodiment issues the operation command to the second device 12. Consequently, the proxy server 70 according to the seventh embodiment can perform filtering on commands for each user.

Furthermore, on the basis of the issue condition that is stored by being associated with an account, the proxy server 70 according to the seventh embodiment determines whether an operation command can be issued. If it is determined that the operation command can be issued, the proxy server 70 issues the operation command to the second device 12. Consequently, the proxy server 70 according to the seventh embodiment can perform filtering on commands in accordance with information indicating, for each user, whether a command can be executed and in cooperation with the other workflow in the system.

Furthermore, with the proxy server 70 according to the seventh embodiment, a single password can be used for each login to each of the multiple second devices 12. In such a case, because the proxy server 70 according to the seventh embodiment stores therein only one piece of login information, it is possible to reduce the risk of leakage of login information when compared with a case in which multiple pieces of login information are stored and managed. Consequently, with the proxy server 70 according to the seventh embodiment, security can be further improved.

In the above explanation, a description thus far has been given of the embodiments according to the present invention; however, the embodiments are not limited thereto and can be implemented with various kinds of embodiments other than the embodiments described above. Therefore, another embodiment included in the present invention will be described below.

For example, in the second to the seventh embodiments, a description thus far has been given of a case in which a password used for a login to the second device 12 is not associated with an account; however, the device disclosed in the present invention is not limited thereto and a password may also be associated with an account. For example, a device that can be logged in with multiple passwords is used as the second device 12. In such a case, with the device disclosed in the present invention, each of these multiple passwords is associated with each of multiple users and then each of the users may also log into the second device 12 by using the associated password. At this point, the changing unit 34c described above may also change only a password, from among the multiple passwords, that is associated with a logged out user every time a user logs out. Alternatively, the multiple passwords are changed at a time. Furthermore, if a user is allocated to a predetermined group, such as a group for each department, the changing unit 34c may also change only a password, from among the multiple passwords, for users in a group to which a logged out user is allocated.

Furthermore, of the processes described in the first to the seventh embodiments, the whole or a part of the processes that are mentioned as being automatically performed can also be manually performed. For example, a user or the like may also input an instruction to execute each process via an operation receiving device (not illustrated).

Furthermore, the processes performed at steps described in each embodiment may be separated or integrated depending on various loads or use conditions. Furthermore, it may also possible to omit a step. For example, the processes performed at Steps S507 and S601 illustrated in FIG. 14 may also be integrated.

Furthermore, the order of the processes erformed at steps described in each embodiment may be changed depending on various loads or use conditions. For example, the order of the processes performed at Step S214 and Step S215 illustrated in FIG. 14 may also be swapped.

The components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. For example, the determining unit 64d and the issuing unit 64e illustrated in FIG. 15 may also be integrated. Furthermore, the determining unit 74d and the issuing unit 74e illustrated in FIG. 18 may also be integrated.

### [h] Eighth Embodiment

### [Management program]

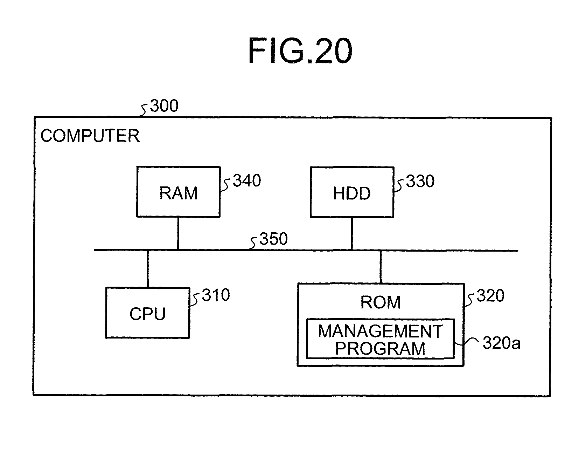

Furthermore, various processes performed by the management device or the proxy server described in the above embodiments can be implemented by program prepared in advance and executed by a computer system, such as a personal computer or a workstation. Accordingly, in the following, an example of a computer that executes a management program having the same function as that performed by the management device or the proxy server described in one of the first to the seventh embodiments will be described with reference to FIG. 20.

FIG. 20 is a schematic diagram illustrating a computer that executes the management program. As illustrated in FIG. 20, a computer 300 according to an eighth embodiment includes a central processing unit (CPU) 310, a read only memory (ROM) 320, a hard disk drive (HDD) 330, and a random access memory (RAM) 340. Each of the units 300 to 340 is connected via a bus 350.

The ROM 320 stores therein, in advance, a management program 320a having the same function as that performed by the authentication unit, the control unit, the changing unit, the determining unit, and the issuing unit in one of the first to the seventh embodiments described above. Furthermore, the management program 320a may also be appropriately separated. For example, the management program 320a may also be divided into two: a program having the same function as that performed by the authentication unit and the control unit and a program having the same function as that performed by the changing unit and the determining unit.

Then, the CPU 310 reads the management program 320a from the ROM 320 and executes the management program 320a.

The HDD 330 stores therein an account table, a password table, and available operation information. The account table, the password table, and the available operation information correspond to the account table 23a, the password table 23b, and the available operation information 63a, respectively.

Then, the CPU 310 reads the account table, the password table, or the available operation information and then stores it in the RAM 340. Furthermore, by using the account table, the password table, and the available operation information stored in the RAM 340, the CPU 310 executes the management program. All the data stored in the RAM 340 does not always have to be stored in the RAM 340, and only a part of data, from among all the pieces of data, used for processes may be stored in the RAM 340.

Furthermore, the management program described above does not need to be stored in the ROMs 320 and 420 from the beginning.

For example, the program is stored in a "portable physical medium", such as a flexible disk (FD), a CD-ROM, a DVD disk, a magneto-optic disk, an IC CARD, or the like that is to be inserted into the computer 300. Then, the computer 300 may read and execute the program from the portable physical medium.

Alternatively, the program is stored in "another computer (or a server)" or the like that is connected to the computer 300 through a public circuit, the Internet, a LAN, a WAN, or the like. Then, the computer 300 may read the program from the other computer or the server device and execute the program.

### [Explanation of Reference]

- 10: management device
- 10a: first storing unit
- 10b: second storing unit
- 10c: authentication unit
- 10d: control unit
- 11: first device
- 12: second device

## Claims

1. A management device comprising:
an authentication unit that authenticates, when authentication information is received from a first device, the received authentication information by using multiple pieces of authentication information that are stored in a first storing unit; and
a control unit that executes, when the authentication performed by the authentication unit is successful, a login to a second device by using a single piece of login information that is stored in a second storing unit.

2. A management device comprising:
an authentication unit that authenticates, when authentication information is received from a first device, the received authentication information by using multiple pieces of authentication information that are stored in a first storing unit;
a control unit that executes, when the authentication performed by the authentication unit is successful, a login to a second device by using login information that is stored in a second storing unit; and
a changing unit that changes the login information stored in the second storing unit when a log out of the second device is performed.

3. The management device according to claim 1 or 2, wherein the authentication unit performs the authentication by further using a predetermined operation condition related to the second device.

4. The management device according to claim 1 or 2, wherein, when a predetermined operation condition related to the second device is satisfied, the control unit executes a login to the second device by using the login information.

5. The management device according to any one of claims 1 to 4, further comprising:
a determining unit that determines, on the basis of issue condition that is stored and when a request for issuing an operation command for the second device is received from the first device after the login, whether the operation command can be issued, and
an issuing unit that issues, when the determining unit determines that the operation command can be issued, the operation command to the second device.

6. The management device according to claim 5, wherein the determining unit performs the determination by further using the predetermined operation condition related to the second device.

7. A computer-readable recording medium having stored therein a management program causing a computer to execute a process comprising:
authenticating, when authentication information is received from a first device, the received authentication information by using multiple pieces of authentication information that are stored in a first storing unit; and
executing, when the authentication is successful at the authenticating, a login to a second device by using a single piece of login information that is stored in a second storing unit.

8. A computer-readable recording medium having stored therein a management program causing a computer to execute a process comprising:
authenticating, when authentication information is received from a first device, the received authentication information by using multiple pieces of authentication information that are stored in a first storing unit;
executing, when the authentication at the authenticating is successful, a login to a second device by using login information that is stored in a second storing unit; and
changing, when a log out of the second device is performed, the login information that is stored in the second storing unit.

9. A management method executed by a computer, the management method comprising:
authenticating, when authentication information is received from a first device, the received authentication information by using multiple pieces of authentication information that are stored in a first storing unit; and
executing, when the authentication is successful at the authenticating, a login to a second device by using a single piece of login information that is stored in a second storing unit.

10. A management method executed by a computer, the management method comprising:
authenticating, when authentication information is received from a first device, the received authentication information by using multiple pieces of authentication information that are stored in a first storing unit;
executing, when the authentication is successful at the authenticating, a login to a second device by using login information that is stored in a second storing unit; and
changing, when a log out of the second device is performed, the login information that is stored in the second storing unit.
